# DEMANDE DE BREVET EUROPEEN

(11) **EP 3 685 702 A1**
(43) Date de publication de la demande: **29.07.2020**
(21) Numéro de dépôt: 20151117.7
(22) Date de dépôt: 10.01.2020
(51) Int. Cl.: A46B 1/00, A46B 5/00, A46B 11/00, A45D 34/04, A45D 40/26, A46B 9/02

(54) **APPLICATEUR POUR PRODUIT COSMÉTIQUE, NOTAMMENT DU MASCARA, ENSEMBLE APPLICATEUR ASSOCIÉ ET PROCÉDÉ DE FABRICATION D'UN TEL APPLICATEUR**

(30) Priorité: 25.01.2019 FR 1900663
(71) Demandeur: Albéa Services, 92230 Gennevilliers (FR)
(72) Inventeur: CRAPET, Yann, 95830 FREMECOURT (FR); WASTYN, Charlotte, 75008 PARIS (FR)
(74) Mandataire: Gevers & Orès

(57) **Abrégé**

L'invention concerne un applicateur (1) pour produit cosmétique, comprenant une première partie (3) et une deuxième partie (5) qui s'étendent le long d'une direction d'extension longitudinale (X) d'une extrémité proximale (1a) vers une extrémité distale (1b) libre de l'applicateur, la première partie (3) et la deuxième partie (5) étant configurées pour former des parties d'application du produit cosmétique,
l'une des parties (3, 5) est montée mobile en translation par rapport à l'autre desdites parties (3, 5) entre au moins une première position repliée et une deuxième position déployée,
les première et deuxième parties (3, 5) sont configurées pour former ensemble un réservoir (7a, 7b1, 7b2) à volume variable qui, destiné à contenir ledit produit cosmétique, présente un premier volume (V1) lorsque lesdites parties (3, 5) occupent la première position repliée et un deuxième volume (V2) lorsque lesdites parties (3, 5) occupent la deuxième position déployée.

## Description

### Domaine technique de l'invention

L'invention concerne un applicateur pour produit cosmétique, notamment du mascara, et un ensemble applicateur associé. L'invention concerne également un procédé pour la fabrication d'un tel applicateur.

### Arrière-plan technique

Les ensembles applicateur pour produit cosmétique comprennent classiquement un récipient comprenant un corps formant un réservoir destiné à contenir le produit cosmétique et un applicateur du produit cosmétique.

Il existe une grande variété d'applicateurs aux designs et structures diverses, chacun apportant au moins un effet d'application spécifique et original.

Notamment, il existe des applicateurs qui permettent d'appliquer un produit cosmétique qui est libéré au fur et à mesure de l'application. Dans le cas de mascara, cela permet de donner un effet de volume aux cils après application du produit cosmétique. Le produit cosmétique peut être stocké dans/sur l'applicateur. La redistribution du produit cosmétique se fait typiquement par pression radiale sur l'applicateur. Ce geste peut ne pas être très agréable pour l'utilisateur qui doit appuyer l'applicateur sur la surface à maquiller, tels que les cils, pour faire sortir le produit cosmétique.

Il existe donc toujours un besoin d'applicateurs de produit cosmétique qui permettent d'assurer une charge suffisante en produit cosmétique et une bonne restitution de celui-ci, tout en conservant une facilité d'utilisation.

### Résumé de l'invention

L'invention concerne un applicateur pour produit cosmétique comprenant une première partie et une deuxième partie qui s'étendent le long d'une direction d'extension longitudinale X d'une extrémité proximale vers une extrémité distale libre de l'applicateur, la première partie et la deuxième partie étant configurées pour former des parties d'application du produit cosmétique.

Selon l'invention, l'une des parties est montée mobile en translation par rapport à l'autre desdites parties entre au moins une première position repliée et une deuxième position déployée. Encore selon l'invention, les première et deuxième parties sont configurées pour former ensemble un réservoir à volume variable qui, destiné à contenir ledit produit cosmétique, présente un premier volume V1 lorsque lesdites parties occupent la première position repliée et un deuxième volume V2 lorsque lesdites parties occupent la deuxième position déployée.

Autrement dit, en position déployée, l'applicateur présente une longueur maximale L, alors qu'en position repliée, l'applicateur présente une longueur minimale l.

De plus, il est possible de stocker du produit cosmétique dans le réservoir à volume variable, à l'intérieur du réservoir délimité par lesdites première et deuxième parties de l'applicateur.

Un simple mouvement de va et vient entraîne le mouvement de translation de la partie, dite mobile, ladite partie mobile coulissant relativement à l'autre partie, dite fixe. Ce mouvement de translation de la position repliée vers la position déployée, et inversement, entraîne la libération du produit cosmétique stocké à l'intérieur du réservoir.

Ce mouvement de translation peut en outre se faire facilement par l'utilisateur lors de l'application du produit cosmétique.

L'utilisateur n'a ainsi pas besoin d'exercer une pression sur la surface à maquiller pour faire sortir le produit cosmétique. Les gênes lors du maquillage sont avantageusement limitées pour l'utilisateur.

De plus, le mouvement de translation permet aussi d'aspirer du produit cosmétique lors de l'application si l'utilisateur trouve qu'une quantité trop importante a été distribuée. L'utilisateur peut ainsi gérer facilement l'entrée et/ou la sortie en produit cosmétique au cours de l'application.

Selon différents modes de réalisation, qui pourront être pris ensemble ou séparément :
- chacune desdites parties est évidée pour présenter un volume interne dans lequel est imbriquée l'autre partie,
- chacune des parties est une pièce unique monolithique,
- l'applicateur est obtenu sans assemblage,
- chacune des parties comprend au moins deux branches longitudinales délimitant ledit volume interne,
- les branches de la première partie sont alternées circonférentiellement avec les branches de la deuxième partie,
- chacune des première et deuxième parties comprend au moins une ouverture agencée entre deux branches consécutives,
- l'ouverture permet le passage d'une branche de l'autre partie,
- l'ouverture présente une largeur supérieure à la largeur de la branche passant dans l'ouverture de manière à permettre un débattement en rotation de la partie mobile par rapport à l'autre partie,
- tout ou au moins une partie desdites branches comporte au moins une rangée de protubérances s'étendant radialement en saillie le long de l'extension longitudinale X,
- la première partie présente une extrémité distale libre pourvue de protubérances,
- la première partie présente une extrémité proximale libre dépourvue de protubérances,
- l'extrémité proximale libre de la première partie est agencée dans le volume interne de la deuxième partie,
- la deuxième partie présente une extrémité distale libre dépourvue de protubérances,
- l'extrémité distale libre de la deuxième partie est agencée dans le volume interne de la première partie,
- chacune des branches s'étend de l'extrémité distale à l'extrémité proximale de chacune des parties,
- l'extrémité proximale de la deuxième partie est configurée pour être fixée à une tige de l'applicateur,
- l'extrémité proximale de la première partie est libre,
- la première partie est mobile en translation par rapport à la deuxième partie,
- l'extrémité proximale de la première partie est configurée pour être fixée à une tige de l'applicateur,
- l'extrémité proximale de la deuxième partie est libre,
- l'extrémité proximale de la deuxième partie comprend un orifice traversé par l'extrémité proximale de la première partie
- la deuxième partie est mobile en translation par rapport à la première partie,
- lesdites protubérances sont venues de matière desdites branches
- l'applicateur est obtenu par fabrication additive.

L'invention concerne aussi un ensemble applicateur pour produit cosmétique, comprenant :
- un récipient comprenant un corps formant un réservoir destiné à contenir le produit cosmétique, et
- un applicateur du produit cosmétique tel que définit précédemment adapté pour être fixé sur le récipient, de sorte que l'applicateur est logé à l'intérieur du réservoir.

L'invention concerne enfin un procédé pour la fabrication d'un applicateur pour produit cosmétique, notamment mascara, tel que définit précédemment. Le procédé comprend :
- une étape d'élaboration d'un modèle numérique de l'applicateur ;
- une étape de fabrication de l'applicateur au moyen du modèle numérique.

### Brève description des figures

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés. Sur ces dessins :

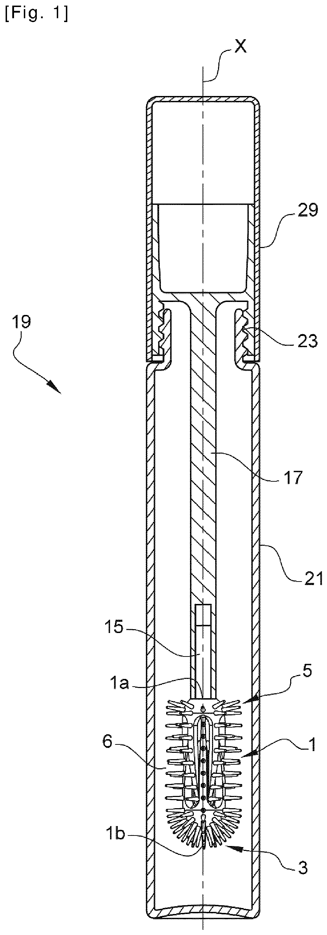

[Fig. 1] la figure 1 est une vue en coupe d'un exemple d'ensemble applicateur selon un premier mode de réalisation de l'invention ;
[Fig. 2] la figure 2 est une vue de côté d'un applicateur selon un premier mode de réalisation de l'invention dans une première position repliée ;
[Fig. 3] la figure 3 est une vue en coupe longitudinale de l'applicateur de la figure 2 ;
[Fig. 4] la figure 4 est une vue de côté de l'applicateur de la figure 2 dans une deuxième position déployée ;
[Fig. 5] la figure 5 est une vue en coupe longitudinale de de l'applicateur la figure 4 ;
[Fig. 6] la figure 6 est une vue de côté de l'applicateur de la figure 2 dans une position intermédiaire ;
[Fig. 7] la figure 7 est une vue en coupe longitudinale de de l'applicateur la figure 6 ;
[Fig. 8] la figure 8 est une vue de face selon la direction longitudinale X de l'applicateur de la figure 2 ;
[Fig. 9] la figure 9 est une vue en bout selon la direction longitudinale X de l'applicateur de la figure 2 ;
[Fig. 10] la figure 10 est une vue de côté d'un applicateur selon un deuxième mode de réalisation de l'invention dans une première position repliée ;
[Fig. 11] la figure 11 est une vue en coupe longitudinale de l'applicateur de la figure 10 ;
[Fig. 12] la figure 12 est une vue de côté de l'applicateur de la figure 10 dans une deuxième position déployée ;
[Fig. 13] la figure 13 est une vue en coupe longitudinale de l'applicateur de la figure 12 ;
[Fig. 14] la figure 14 est une vue de côté de l'applicateur de la figure 10 dans une position intermédiaire ;
[Fig. 15] la figure 15 est une vue en coupe longitudinale de l'applicateur de la figure 14 ;
[Fig. 16] la figure 16 est une vue de face selon la direction longitudinale X de l'applicateur de la figure 10 ;
[Fig. 17] la figure 17 est une vue en bout selon la direction longitudinale X de l'applicateur de la figure 10 ;
[Fig. 18a] la figure 18a est une vue de détail de l'applicateur des figures 2 et 10 ;
[Fig. 18b] la figure 18b est une vue de détail de l'applicateur des figures 6 et 14 ;
[Fig. 18c] la figure 18c est une vue de détail de l'applicateur des figures 4 et 12.

### Description détaillée de l'invention

Comme illustré sur les différentes figures, l'invention concerne un applicateur 1 pour produit cosmétique, notamment, comme illustré ici, pour mascara.

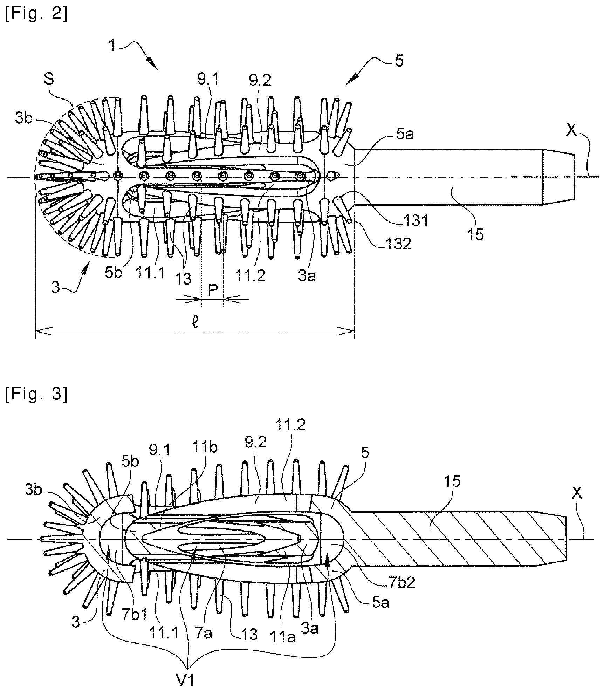

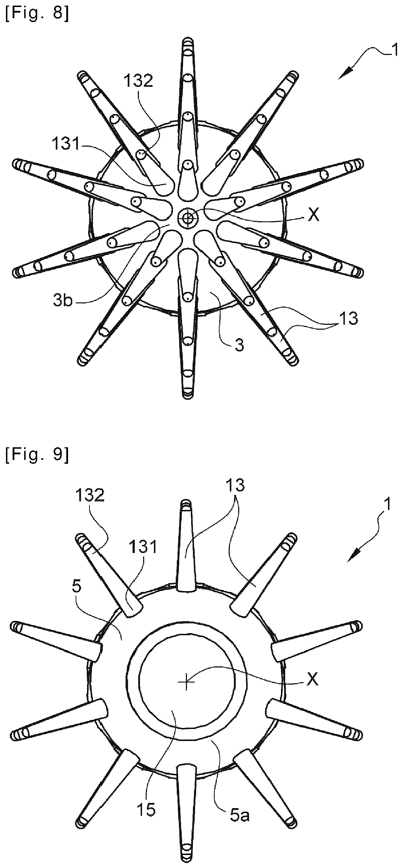

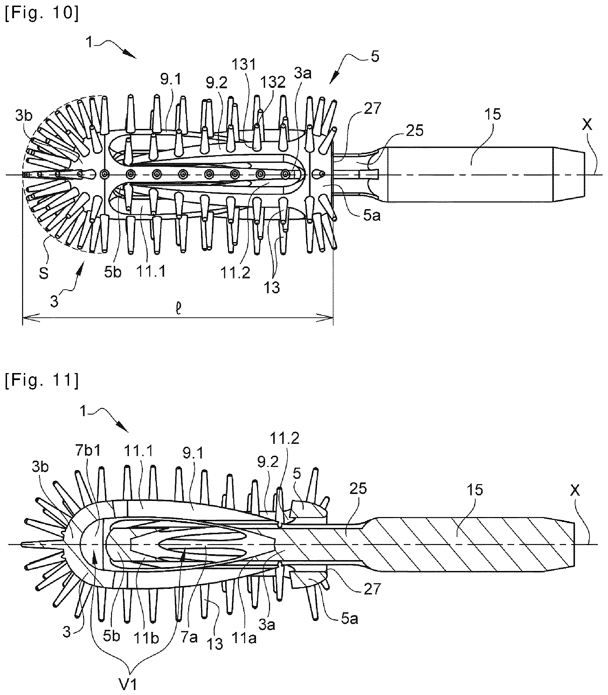

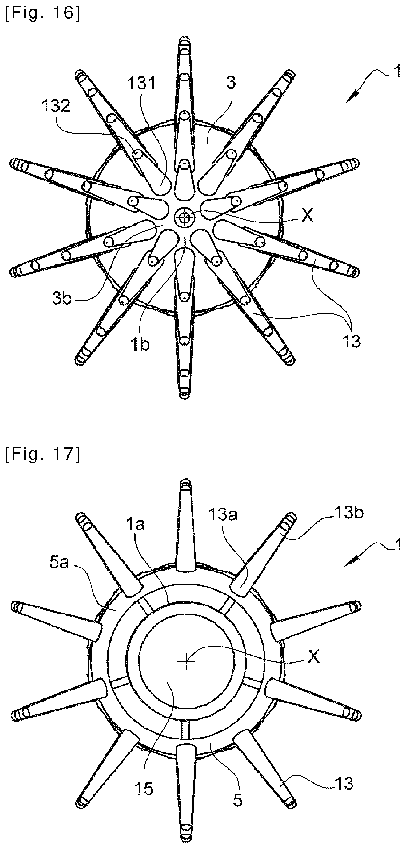

Deux modes de réalisation sont décrits ici. Le premier mode de réalisation est illustré aux figures 2 à 9 et le deuxième mode de réalisation est illustré aux figures 10 à 17.

L'applicateur 1 comprend une première partie 3 et une deuxième partie 5 qui s'étendent le long d'une direction d'extension longitudinale X d'une extrémité proximale 1a vers une extrémité distale 1b libre.

La première partie 3 et la deuxième partie 5 sont respectivement configurées pour former des parties d'application du produit cosmétique.

Chacune des parties 3, 5 est une pièce unique monolithique. L'applicateur est obtenu sans assemblage. Autrement dit, l'applicateur est non obtenu par assemblage.

Selon l'invention, l'une des parties 3, 5 est montée mobile en translation par rapport à l'autre desdites parties 3, 5 entre au moins une première position, dite repliée et une deuxième position, dite déployée.

En position déployée, l'applicateur présente une longueur maximale L, alors qu'en position repliée, l'applicateur présente une longueur minimale l tel qu'illustré aux figures 2, 4, 10 et 12. L'une des parties 3, 5, dite partie mobile, est donc apte à coulisser par rapport à l'autre desdites parties 3, 5, dite partie fixe, entre au moins lesdites première position repliée et deuxième position déployée.

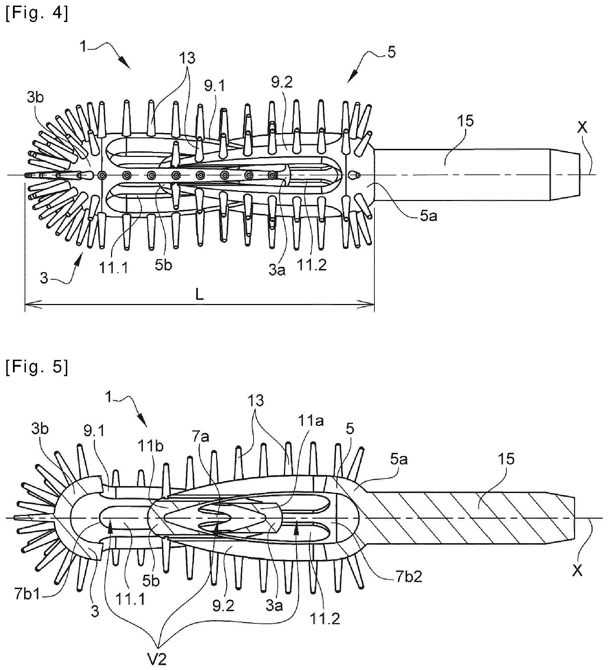

La première position repliée est illustrée aux figures 2, 3, 10 et 11 tandis que la deuxième position déployée est illustrée aux figures 4, 5, 12 et 13.

La première position repliée et la deuxième position déployée constitue des positions extrêmes entre lesquelles celle desdites parties 3, 5 qui est mobile est susceptible d'occuper une pluralité de positions intermédiaires.

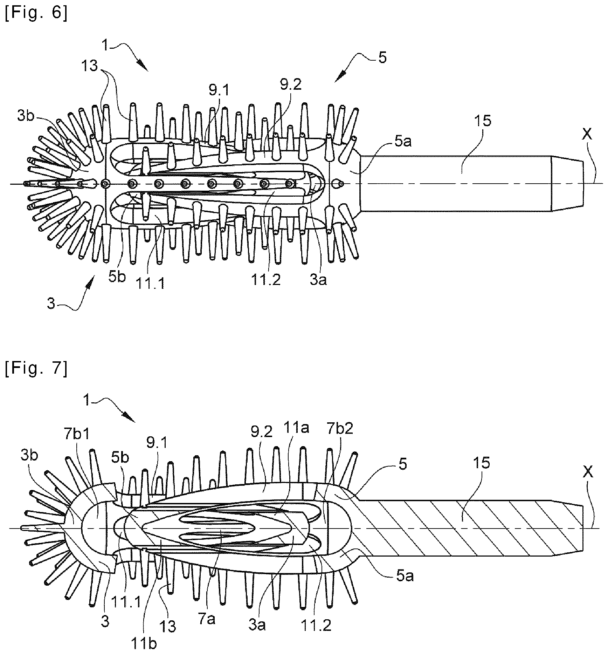

Une position intermédiaire est illustrée aux figures 6, 7, 14 et 15. Les première et deuxième parties 3, 5 sont configurées pour former ensemble un réservoir 7a, 7b1, 7b2 à volume variable qui est destiné à contenir ledit produit cosmétique.

Le réservoir 7a, 7b1, 7b2 à volume variable présente un premier volume V1 lorsque les parties 3, 5 occupent la première position repliée et un deuxième volume V2 lorsque lesdites parties 3, 5 occupent la deuxième position déployée.

Par ailleurs, le réservoir 7a, 7b1, 7b2 comprend une première zone de stockage 7a et une seconde zone de stockage 7b1, 7b2. La première zone de stockage 7a, dite aussi zone centrale de stockage, est située au centre de l'applicateur entre l'extrémité proximale 3a de la première partie 3 et l'extrémité distale 5b de la deuxième partie 5.

La zone centrale de stockage 7a présente un volume minimal lorsque l'applicateur 1 est dans la position déployée et un volume maximal lorsque l'applicateur 1 est dans la position repliée.

La deuxième zone de stockage 7b1, 7b2 comprend au moins une région, dite première région 7b1 qui est située à l'extrémité distale 1b de l'applicateur 1 entre les parties distales 3b et 5b des première et deuxième parties 3, 5.

La au moins une première région 7b1 de la deuxième zone de stockage 7b1, 7b2 présente un volume minimal lorsque l'applicateur 1 est dans la position repliée et un volume maximal lorsque l'applicateur 1 est dans la position déployée.

Dans chacun des deux modes de réalisation illustrés sur les figures, chacune des parties 3, 5 de l'applicateur 1 est évidée pour présenter un volume interne.

Le volume interne de chacune des parties 3, 5 est ainsi délimité par au moins deux branches 9.1, 9.2 longitudinales qui s'étendent de l'extrémité distale 1b à l'extrémité proximale 1a et par au moins deux ouvertures 11.1, 11.2 qui sont agencées entre deux branches 9.1, 9.2 consécutives.

Cet agencement de branches 9.1, 9.2 et d'ouvertures 11.1, 11.2 permet que chacune des parties 3, 5 soit imbriquée dans le volume interne de l'autre partie, une branche 9.1, 9.2 d'une partie 3, 5 passant à travers l'ouverture 11.1, 11.2 de l'autre partie 3, 5.

La première partie 3 et la deuxième partie 5 de l'applicateur 1 s'interpénètrent, sont imbriquées l'une dans l'autre, chacune des branches 9.1, 9.2 de l'une des parties 3, 5 s'étendant à travers l'une des ouvertures 11.1, 11.2 de l'autre.

Les branches 9.1 de la première partie 3 sont, circonférentiellement autour de la direction d'extension longitudinale X, alternées avec les branches 9.2 de la deuxième partie 5.

Cet agencement permet de façon avantageuse d'avoir un applicateur dépourvu d'une âme centrale s'étendant le long de la direction d'extension longitudinale X d'une extrémité proximale vers une extrémité distale, comme c'est le cas dans les applicateurs classiques.

Les deux modes de réalisation illustrés ici diffèrent par celle desdites parties 3, 5 qui constitue la partie mobile de l'applicateur 1.

### PREMIER MODE DE REALISATION

Dans le premier mode de réalisation illustré aux figures 2 à 9, la partie mobile est la première partie 3, la première partie 3 étant montée mobile relativement à la deuxième partie 5, considérée comme fixe.

De préférence, la première partie 3 est de forme générale oblongue et s'étend le long de la direction d'extension longitudinale X d'une extrémité proximale 3a libre en forme d'ogive vers une extrémité distale 3b libre de forme sphérique. Le rayon de courbure de l'extrémité distale 3b est ainsi supérieur au rayon de courbure de l'extrémité proximale 3a.

La première partie 3 est évidée de manière à présenter un volume interne.

Ce volume interne est délimité par des branches 9.1 longitudinales, par exemple ici au nombre de cinq, qui s'étendent de l'extrémité distale 3b à l'extrémité proximale 3a où elles se rejoignent.

La première partie 3 comprend en outre des ouvertures 11.1 qui sont chacune agencées entre deux branches 9.1 consécutives. Ces ouvertures 11.1 forment globalement des fentes qui s'étendent longitudinalement.

Avantageusement, la première partie 3 comprend ainsi cinq ouvertures 11.1 alternées avec les cinq branches 9.1.

Dans le mode de réalisation représenté ici, chacune des branches 9.1 comporte une rangée de protubérances 13 s'étendant radialement en saillie et le long de l'extension longitudinale X.

Dans d'autres modes de réalisation non représentés, les branches 9.1 peuvent comporter une ou plusieurs rangées de protubérances 13. Le nombre de rangées pouvant varier d'une branche 9.1 à l'autre.

Avantageusement, les protubérances 13 sont venues de matière des branches 9.1 de la première partie 3, réalisées en une seule pièce avec lesdites branches 9.1.

De préférence, les protubérances 13 s'étendent orthogonalement à l'extension longitudinale X.

Dans d'autres modes de réalisation non représentés, les protubérances 13 peuvent être inclinées vers les extrémités proximale 1a et/ou distale 1b de l'applicateur 1.

L'extrémité distale 3b libre de forme sphérique est aussi pourvue de protubérances 13.

Les protubérances 13 s'étendent en saillie orthogonalement à la surface de l'extrémité de manière à être inscrites dans une enveloppe sphérique S.

Les protubérances 13 sont agencées en rangées longitudinales dont certaines sont alignées avec les branches 9.1 et les autres sont alignées avec les ouvertures 11.1.

L'extrémité proximale 3a est dépourvue de protubérance 13.

La deuxième partie 5, ici fixe, est de forme générale oblongue et s'étend le long de la direction d'extension longitudinale X d'une extrémité proximale 5a vers une extrémité distale 5b libre.

De préférence, l'extrémité distale libre 5b présente une forme d'ogive.

L'extrémité proximale 5a est reliée à un manchon 15 configuré pour être fixé à une tige 17 d'un ensemble applicateur 19.

La deuxième partie 5 est évidée de manière à présenter un volume interne.

Ce volume interne est délimité par des branches 9.2 longitudinales, par exemple ici au nombre de cinq, qui s'étendent de l'extrémité distale 5b vers l'extrémité proximale 5a, c'est-à-dire de l'extrémité distale 5b vers le manchon 15.

La deuxième partie 5 comprend en outre des ouvertures 11.2 agencées entre deux branches 9.2 consécutives. Ces ouvertures 11.2 forment globalement des fentes qui s'étendent longitudinalement.

La deuxième partie 5 comprend ainsi cinq ouvertures 11.2 alternées avec les cinq branches 9.2.

Dans le mode de réalisation représenté ici, chacune des branches 9.2 comporte une rangée de protubérances 13 s'étendant radialement en saillie et le long de l'extension longitudinale X.

Dans d'autres modes de réalisation non représentés, les branches 9.2 peuvent comporter une ou plusieurs rangées de protubérances 13. Le nombre de rangées pouvant varier d'une branche 9.2 à l'autre.

Avantageusement, les protubérances 13 sont venues de matière des branches 9.2 de la deuxième partie 5, réalisées en une seule pièce avec lesdites branches 9.2.

De préférence, les protubérances 13 s'étendent transversalement orthogonalement à l'extension longitudinale X. Dans d'autres modes de réalisation non représentés, les protubérances 13 peuvent être inclinées vers les extrémités proximale 1a et/ou distale 1b de l'applicateur 1.

L'extrémité distale 5b et l'extrémité proximale 5a de la deuxième pièce 5 sont dépourvues de protubérance 13.

Dans ce premier mode de réalisation, sur chacune des première et deuxième parties 3, 5, les protubérances 13 sont coniques.

Selon une direction transversale, orthogonale à la direction d'extension longitudinale X, les dimensions des protubérances 13 sont plus élevées au voisinage d'une extrémité 131 formant une base solidaire de la branche 9.1, 9.2 qu'au voisinage de l'extrémité 132 libre de la protubérance 13. Autrement dit, la protubérance 13 présente transversalement une section qui diminue de l'extrémité 131 vers l'extrémité 132 libre.

Comme décrit précédemment chacune des parties 3, 5 est évidée pour présenter un volume interne dans lequel est imbriquée l'autre partie 3, 5.

Chacune des parties 3, 5 est une pièce unique monolithique.

L'applicateur est obtenu sans assemblage. Autrement dit, l'applicateur est non obtenu par assemblage.

Ainsi, les branches 9.1 de la première partie 3 sont alternées circonférentiellement avec les branches 9.2 de la deuxième partie 5 et les ouvertures 11.1, 11.2 d'une des parties 3, 5 permettent le passage des branches 9.1, 9.2 de l'autre partie 3, 5 et inversement.

L'extrémité proximale 3a de la première partie 3 est agencée dans le volume interne de la deuxième partie 5 et l'extrémité distale 5b de la deuxième partie 5 est agencée dans le volume interne de la première partie 3.

Dans ce premier mode de réalisation de l'applicateur 1 et selon l'invention, la première partie 3 est montée mobile en translation par rapport à la deuxième partie 5 entre la première position, dite repliée, et la deuxième position, dite déployée.

La première position repliée est illustrée aux figures 2 et 3, tandis que la deuxième position déployée est illustrée aux figures 4 et 5. Une position intermédiaire est également illustrée aux figures 6 et 7.

Les première et deuxième parties 3, 5 sont configurées pour former intérieurement un réservoir 7a, 7b1, 7b2 à volume variable qui est destiné à contenir le produit cosmétique.

Le réservoir 7a, 7b1, 7b2 à volume variable présente ainsi un premier volume V1 lorsque les parties 3, 5 occupent la première position repliée et un deuxième volume V2 lorsque les parties 3, 5 occupent la deuxième position déployée.

Comme mentionné précédemment, le réservoir 7a, 7b1, 7b2 comprend une première zone de stockage 7a et une seconde zone de stockage 7b1, 7b2.

La première zone de stockage 7a, dite aussi zone centrale de stockage, est située au centre de l'applicateur entre l'extrémité proximale 3a de la première partie 3 et l'extrémité distale 5b de la deuxième partie 5.

Dans ce premier mode de réalisation, la deuxième zone de stockage 7b1, 7b2 est divisée en deux régions 7b1 et 7b2, chacune située à une des extrémités 1a, 1b de l'applicateur 1. Ainsi, une première région 7b1 est localisée entre les parties distales 3b et 5b des première et deuxième parties 3, 5. Une deuxième région 7b2 est localisée entre les parties proximales 3a et 5a des première et deuxième parties 3, 5.

Dans ce mode de réalisation, les ouvertures 11.1, 11.2 en forme de fentes d'une partie 3, 5 constituent des moyens de guidage des branches 9.1, 9.2 de l'autre partie 3, 5.

Dans la position repliée qui est illustrée par les figures 2 et 3, le réservoir 7a, 7b1, 7b2 à volume variable est à son volume V1. L'extrémité proximale 3a de la première partie 3 et l'extrémité distale 5b de la deuxième partie 5 s'interpénètrent dans le volume interne de l'autre partie 3, 5 de manière que l'extrémité distale 3b de la première partie 3 soit au plus près de l'extrémité distale 5b de la deuxième partie 5 et que l'extrémité proximale 5a de la deuxième partie 5 soit au plus près de l'extrémité proximale 3a de la première partie 3. Dans cette position, la zone centrale de stockage 7a présente un volume maximal et chacune des régions 7b1, 7b2 de la deuxième zone de stockage 7b1, 7b2 présente un volume minimal comme cela est visible à la figure 3.

Dans la position déployée qui est illustrée par les figures 4 et 5, le réservoir 7a, 7b1, 7b2 à volume variable est à son volume V2. L'extrémité proximale 3a de la première partie 3 et l'extrémité distale 5b de la deuxième partie 5 s'interpénètrent dans le volume interne de l'autre partie 3, 5 de manière que l'extrémité proximale 3a de la première partie 3 soit au plus près de l'extrémité distale 5b de la deuxième partie 5. Dans cette position, la zone centrale de stockage 7a présente un volume minimal et chacune des régions 7b1, 7b2 de la deuxième zone de stockage 7b1, 7b2 présente un volume maximal comme cela est visible à la figure 5.

Lors du mouvement en translation de la première partie 3 de la position repliée vers la position déployée, l'extrémité proximale 3a de la première partie 3 et l'extrémité distale 3b de la première partie 3 se déplacent pour s'éloigner respectivement de l'extrémité proximale 5a de la deuxième partie 5 et de l'extrémité distale 5b de la deuxième partie 5.

Le mouvement de translation s'effectue jusqu'à ce que les extrémités proximales 11a des ouvertures 11.1 de la première partie 3 entrent en contact avec les extrémités distales 11b des ouvertures 11.2 de la deuxième partie 5 formant les moyens de butée. La zone centrale de stockage 7a qui présentait un volume maximal présente alors un volume minimal et chacune des régions 7b1, 7b2 de la deuxième zone de stockage 7b1, 7b2 qui présentait un volume minimal présente un volume maximal. On observe ainsi un transfert de volume de la zone centrale de stockage 7a vers la deuxième zone de stockage 7b1, 7b2. Avantageusement, lors du mouvement de la première partie 3 mobile de la position repliée vers la position déployée de l'applicateur, le produit cosmétique stockée dans la zone centrale de stockage 7a, est poussée hors du réservoir 7a, 7b1, 7b2, notamment par les ouvertures 11.1, 11.2.

De plus, lors du passage de la position repliée vers la position déployée le mouvement de la première partie 3, qui est montée mobile, provoque un effet de piston et le remplissage par aspiration du réservoir 7a, 7b1, 7b2 à volume variable, notamment au niveau de la deuxième zone de stockage 7b1, 7b2.

Le mouvement de translation vers la position déployée peut être notamment observé lors de la sortie de l'applicateur 1 d'un récipient 21 de l'ensemble applicateur 19 contenant le produit cosmétique, lorsque la première partie 3 est retenue, en particulier par frottements, lors du passage d'un goulot 23 du récipient 21 de l'ensemble applicateur 19.

Ce mouvement de translation vers la position déployée est aussi favorisé par la gravité lorsque l'applicateur 1 est sorti du récipient 21. Le réservoir 7 à volume variable de l'applicateur 1 est ainsi chargé à son maximum.

Lors du passage de la position déployée à la position repliée, le réservoir 7a, 7b1, 7b2 à volume variable est tout d'abord à son volume V2.

L'extrémité proximale 3a de la première partie 3 et l'extrémité distale 5b de la deuxième partie 5 qui sont déjà agencées dans le volume interne de l'autre partie 3, 5 pénètrent un peu plus dans ce volume interne. Autrement dit, l'extrémité proximale 3a de la première partie 3 se rapproche de l'extrémité proximale 5a de la deuxième partie 5 et l'extrémité distale 5b de la deuxième partie 5 se rapproche de l'extrémité distale 3b de la première partie 3.

La zone centrale de stockage 7a qui présentait un volume minimal présente alors un volume maximal et chacune des régions 7b1, 7b2 de la deuxième zone de stockage 7b1, 7b2 qui présentait un volume maximal présente un volume minimal. On observe ainsi un transfert de volume de la deuxième zone de stockage 7b1, 7b2 vers la zone centrale de stockage 7a.

Cette modification de volume lors du mouvement en translation d'une position à l'autre provoque l'entrée et/ou la sortie du produit cosmétique par les ouvertures 11.1, 11.2. Avantageusement, ce mouvement en translation se fait lors de l'application du produit cosmétique quand l'utilisateur effectue un mouvement de va et vient horizontal sur la surface à maquiller, notamment par la retenue de l'une des parties par la surface à maquiller.

Lors de l'application du produit cosmétique, il peut aussi être intéressant d'effectuer un mouvement de translation de manière à passer de la position repliée à la position déployée, et inversement, pour permettre d'aspirer le produit cosmétique et de répartir du produit à l'intérieur du réservoir 7a, 7b1, 7b2 à volume variable, pour ensuite effectuer à nouveau un mouvement de translation de la position déployée à la position repliée pour faire ressortir le produit du réservoir 7a, 7b1, 7b2 et ainsi bénéficier du produit restant. Il est ainsi possible d'utiliser un maximum de produit cosmétique et de continuer l'application sans avoir à replonger l'applicateur 1 dans le récipient 21.

Dans les deux modes de réalisation illustrés, les cils, à l'aide des protubérances 13, vont retenir la partie mobile et permettre son mouvement en translation provoquant l'entrée et/ou la sortie du produit cosmétique.

De plus, dans le cas d'un applicateur 1 pourvu de protubérances 13 comme illustré ici, lors du passage de la position déployée à la position repliée et vice versa de la position repliée à la position déployée, le mouvement en translation permet une variation du pas « p » entre les protubérances 13 d'une branche 9.1, 9.2 à une autre branche 9.1, 9.2 consécutive.

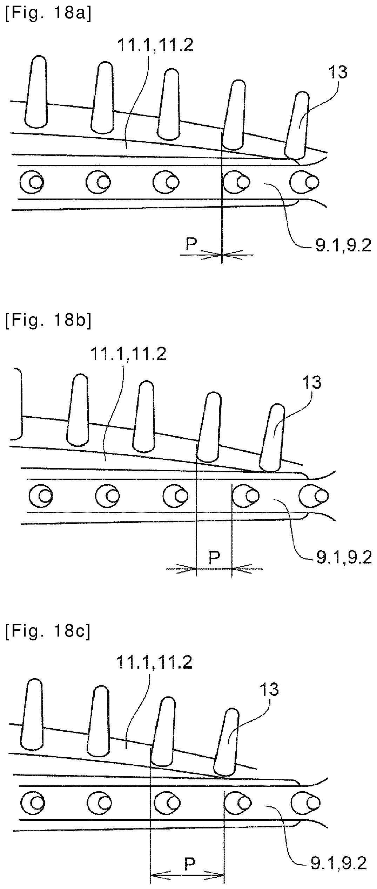

On entend, ici, par « pas », l'écartement dans une position donnée (déployée, repliée, intermédiaire) entre une première protubérance 13 d'une branche de la partie mobile 3 et une seconde protubérance 13 d'une branche consécutive de la partie fixe 3, comme illustré aux figures 18a, 18b et 18c. Le pas p est mesuré à la base des protubérances 13, cet écartement pouvant être compris entre 0 mm et 2 mm.

Le pas est de 0 mm lorsque les deux protubérances 13 sont alignées comme illustré à la figure 18a et le pas est à son maximum lorsque la protubérance 13 de la partie mobile est alignée avec la protubérance 13 suivante comme illustré à la figure 18c.

Cette variation de pas entraîne un cisaillement des cils qui sont pris au milieu des protubérances 13 de manière à les envelopper d'un maximum de produit cosmétique et augmenter ainsi l'effet de volume. Les cils peuvent également être étirés lorsqu'ils se retrouvent coincés entre deux protubérances, ce qui favorise le peignage.

Par ailleurs les ouvertures 11.1, 11.2 peuvent présenter une largeur supérieure à la largeur de la branche 9.1, 9.2 passant dans l'ouverture 11.1, 11.2 comme représentée sur les figures. Cette différence de dimension permet d'une part de faciliter le mouvement en translation de la partie mobile qui peut être retenue par la présence du produit cosmétique, ici de la première partie 3 par rapport à la deuxième partie 5.

D'autre part, cette différence de dimension permet un débattement en rotation de la partie mobile 3, 5 par rapport à l'autre partie 3, 5.

Comme le mouvement en translation, ce mouvement de rotation participe à la restitution du produit cosmétique présent dans le réservoir 7a, 7b1, 7b2 à volume variable. Cela renforce aussi le cisaillement des cils ce qui favorise encore l'augmentation de l'effet de volume.

### DEUXIEME MODE DE REALISATION

Dans le deuxième mode de réalisation illustré aux figures 10 à 17, la partie mobile de l'applicateur 1 est constituée par la deuxième partie 5, la première partie 3 étant considérée comme fixe.

Les première et deuxième parties 3, 5 ont des structures proches de celles des première et deuxième parties 3, 5 du premier mode de réalisation.

De même, le fonctionnement et l'utilisation de l'applicateur 1 selon le deuxième mode de réalisation sont similaires de ceux du premier mode de réalisation.

Par conséquent, le deuxième mode de réalisation sera notamment décrit par comparaison avec le premier mode de réalisation.

La première partie 3, ici fixe, est de forme générale oblongue et s'étend le long de la direction d'extension longitudinale X d'une extrémité proximale 3a en forme d'ogive, vers une extrémité distale 3b libre de forme sphérique.

Le rayon de courbure de l'extrémité distale 3b est ainsi supérieur au rayon de courbure de l'extrémité proximale 3a.

L'extrémité proximale 3a de la première partie 3 est reliée à un manchon 15 par l'intermédiaire d'une baguette 25, ledit manchon 15 étant configuré pour être fixé à une tige 17 de l'ensemble applicateur 19.

La première partie 3 est évidée de manière à présenter un volume interne.

Ce volume interne est délimité par cinq branches 9.1 longitudinales qui s'étendent de l'extrémité distale 3b à l'extrémité proximale 3a, c'est-à-dire de l'extrémité distale 3b vers la baguette 25 où elles se rejoignent.

La première partie 3 comprend en outre des ouvertures 11.1 agencées entre deux branches 9.1 consécutives. Ces ouvertures 11.1 forment globalement des fentes.

La première partie 3 comprend ainsi cinq ouvertures 11.1 alternées avec les cinq branches 9.1.

Dans le mode de réalisation représenté ici, chacune des branches 9.1 comporte une rangée de protubérances 13 s'étendant radialement en saillie et le long de l'extension longitudinale X.

Dans d'autres modes de réalisation non représentés, les branches 9.1 peuvent comporter une ou plusieurs rangées de protubérances 13. Le nombre de rangées pouvant varier d'une branche 9.1 à l'autre.

Les protubérances 13 sont venues de matière des branches 9.1 de la première partie 3, réalisés en une seule pièce avec lesdites branches 9.1.

De préférence, les protubérances 13 s'étendent transversalement orthogonalement à l'extension longitudinale X. Dans d'autres modes de réalisation non représentés, les protubérances 13 peuvent être inclinées vers les extrémités proximale 1a et/ou distale 1b de l'applicateur 1.

L'extrémité distale 3b libre de forme sphérique est avantageusement aussi pourvue de protubérances 13.

Les protubérances 13 s'étendent en saillie orthogonalement à la surface de l'extrémité de manière à être inscrites dans une enveloppe sphérique S. Les protubérances 13 sont agencées en rangées longitudinales dont certaines sont alignées avec les branches 9.1 et les autres sont alignées avec les ouvertures 11.1.

L'extrémité proximale 3a et la baguette 25 sont dépourvues de protubérance 13.

La deuxième partie 5, ici mobile, est de forme générale oblongue et s'étend le long de la direction d'extension longitudinale X d'une extrémité proximale 5a libre vers une extrémité distale 5b libre en forme d'ogive.

L'extrémité proximale 5a comprend un orifice 27 traversé longitudinalement par l'extrémité proximale 3a de la première partie 3, plus précisément traversé par la baguette 25 permettant de relier l'extrémité proximale 3a au manchon 15.

La deuxième partie 5 est évidée de manière à présenter un volume interne.

Ce volume interne est délimité par cinq branches 9.2 longitudinales qui s'étendent de l'extrémité distale 5b vers l'extrémité proximale 5a.

La deuxième partie 5 comprend en outre des ouvertures 11.2 agencées entre deux branches 9.2 consécutives. Ces ouvertures 11.2 forment globalement des fentes.

La deuxième partie 5 comprend ainsi cinq ouvertures 11.2 alternées avec les cinq branches 9.2.

Dans le mode de réalisation représenté ici, chacune des branches 9.2 comporte une rangée de protubérances 13 s'étendant radialement en saillie et le long de l'extension longitudinale X.

Dans d'autres modes de réalisation non représentés, les branches 9.2 peuvent comporter une ou plusieurs rangées de protubérances 13. Le nombre de rangées pouvant varier d'une branche 9.2 à l'autre.

Les protubérances 13 sont venues de matière des branches 9.2 de la deuxième partie 5, réalisées en une seule pièce avec lesdites branches 9.2.

De préférence, les protubérances 13 s'étendent transversalement orthogonalement à l'extension longitudinale X. Dans d'autres modes de réalisation non représentés, les protubérances 13 peuvent être inclinées vers les extrémités proximale 1a et/ou distale 1b de l'applicateur 1.

L'extrémité distale 5b et l'extrémité proximale 5a sont dépourvues de protubérance 13.

Dans ce mode de réalisation, sur chacune des première et deuxième parties 3, 5, les protubérances 13 sont coniques. Selon une direction transversale, orthogonale à la direction d'extension longitudinale X, les dimensions des protubérances 13 sont plus élevées au voisinage d'une extrémité 131 formant une base solidaire de la branche 9.1, 9.2 qu'au voisinage de l'extrémité 132 libre de la protubérance 13. Autrement dit, la protubérance 13 présente transversalement une section qui diminue de l'extrémité 131 vers l'extrémité 132 libre.

Comme décrit précédemment chacune des parties 3, 5 est évidée pour présenter un volume interne dans lequel est imbriquée l'autre partie 3, 5.

Chacune des parties 3, 5 est une pièce unique monolithique. L'applicateur est obtenu sans assemblage. Autrement dit, l'applicateur est non obtenu par assemblage.

Ainsi, les branches 9.1 de la première partie 3 sont alternées circonférentiellement avec les branches 9.2 de la deuxième partie 5 et les ouvertures 11.1, 11.2 d'une des parties 3, 5 permettent le passage des branches 9.1, 9.2 de l'autre partie 3, 5 et inversement.

L'extrémité proximale 3a de la première partie 3 est agencée dans le volume interne de la deuxième partie 5 et l'extrémité distale 5b de la deuxième partie 5 est agencée dans le volume interne de la première partie 3.

Dans ce deuxième mode de réalisation et selon l'invention, la deuxième partie 5 est montée mobile en translation par rapport à la première partie 3 entre la première position, dite repliée, et la deuxième position, dite déployée.

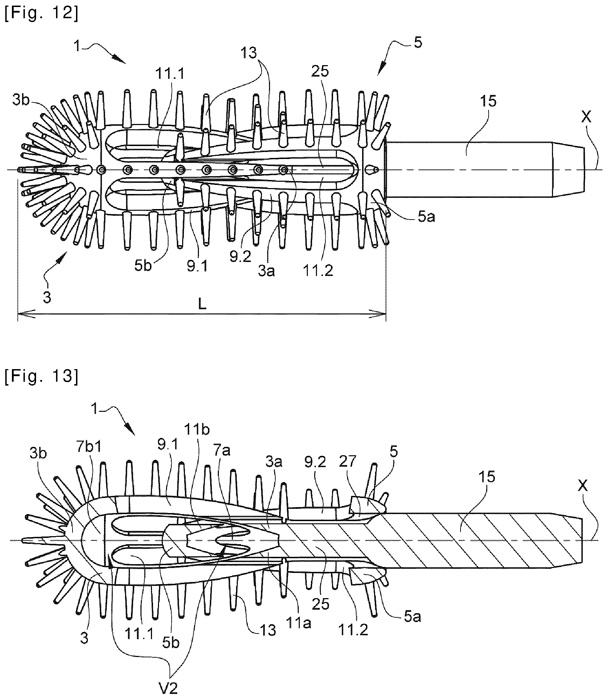

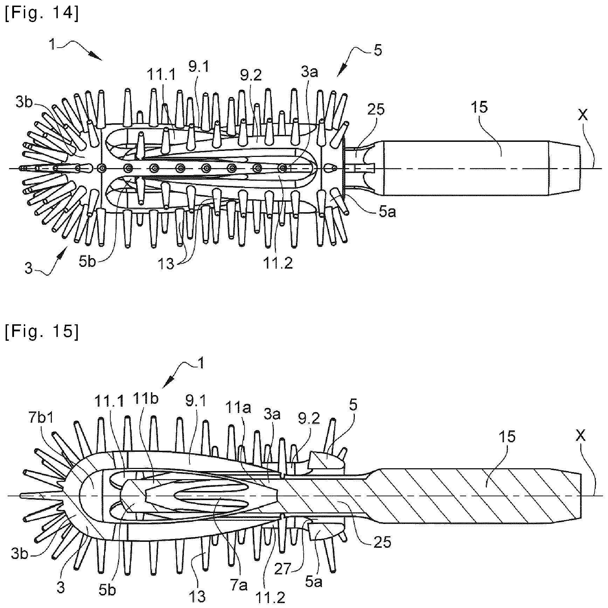

La première position repliée est illustrée aux figures 10 et 11 tandis que la deuxième position déployée est illustrée aux figures 12 et 13. Une position intermédiaire est également illustrée aux figures 14 et 15.

Selon l'invention, les première et deuxième parties 3, 5 sont configurées pour former ensemble un réservoir 7a, 7b1, 7b2 à volume variable qui est destiné à contenir le produit cosmétique. Le réservoir 7a, 7b1, 7b2 à volume variable présente ainsi un premier volume V1 lorsque les parties 3, 5 occupent la première position repliée et un deuxième volume V2 lorsque les parties 3, 5 occupent la deuxième position déployée.

Comme mentionné précédemment, le réservoir 7a, 7b1, 7b2 comprend une première zone de stockage 7a et une seconde zone de stockage 7b1, 7b2.

La première zone de stockage 7a, dite aussi zone centrale de stockage, est située au centre de l'applicateur entre l'extrémité proximale 3a de la première partie 3 et l'extrémité distale 5b de la deuxième partie 5.

Dans ce deuxième mode de réalisation, la deuxième zone de stockage 7b1 comprend une seule région 7b1 située à l'extrémité distale 1b de l'applicateur 1. Cette région 7b1 est localisée entre les parties distales 3b et 5b des première et deuxième parties 3, 5.

Dans ce deuxième mode de réalisation, les ouvertures 11.1, 11.2 en forme de fentes d'une partie 3, 5 constituent avantageusement des moyens de guidage des branches 9.1, 9.2 de l'autre partie 3, 5.

Dans la position repliée qui est illustrée par les figures 10 et 11, le réservoir 7a, 7b1, 7b2 à volume variable est à son volume V1. L'extrémité proximale 3a de la première partie 3 et l'extrémité distale 5b de la deuxième partie 5 s'interpénètrent dans le volume interne de l'autre partie 3, 5 de manière que l'extrémité distale 3b de la première partie 3 soit au plus près de l'extrémité distale 5b de la deuxième partie 5 et que l'extrémité proximale 5a de la deuxième partie 5 soit au plus près de l'extrémité proximale 3a de la première partie 3.

Dans cette position, la zone centrale de stockage 7a présente un volume maximal et la région 7b1 de la deuxième zone de stockage 7b1, 7b2 présente un volume minimal comme cela est visible à la figure 11.

Dans la position déployée qui est illustrée par les figures 12 et 13, le réservoir 7a, 7b1, 7b2 à volume variable est à son volume V2. L'extrémité proximale 3a de la première partie 3 et l'extrémité distale 5b de la deuxième partie 5 s'interpénètrent dans le volume interne de l'autre partie 3, 5 de manière que l'extrémité proximale 3a de la première partie 3 soit au plus près de l'extrémité distale 5b de la deuxième partie 5. Dans cette position, la zone centrale de stockage 7a présente un volume minimal et la région 7b1 de la deuxième zone de stockage 7b1, 7b2 présente un volume maximal comme cela est visible à la figure 13.

Lors du mouvement en translation de la deuxième partie 5 de la position repliée vers la position déployée, l'extrémité proximale 5a de la deuxième partie 5 et l'extrémité distale 5b de la deuxième partie 5 se déplacent et s'éloignent respectivement de l'extrémité proximale 3a de la première partie 3 et de l'extrémité distale 3b de la première partie 3.

Le mouvement de translation s'effectue jusqu'à ce que l'extrémité proximale 5a de la deuxième partie 5 entre en contact avec le manchon 15 et/ou jusqu'à ce que les extrémités distales 11b des ouvertures 11.2 de la deuxième partie 5 entrent en contact avec les extrémités proximales 11a des ouvertures 11.1 de la première partie 3 qui constituent des moyens de butée comme on peut le voir à la figure 13.

La zone centrale de stockage 7a qui présentait un volume maximal présente alors un volume minimal et la région 7b1 de la deuxième zone de stockage 7b1, 7b2 qui présentait un volume minimal présente un volume maximal. On observe ainsi un transfert de volume de la zone centrale de stockage 7a vers la deuxième zone de stockage 7b1, 7b2, et en particulier vers la région 7b1.

Avantageusement, lors du mouvement de la deuxième partie 5 mobile de la position repliée vers la position déployée de l'applicateur, le produit cosmétique stockée dans la zone centrale de stockage 7a, est poussée hors du réservoir 7a, 7b1, 7b2, notamment par les ouvertures 11.1, 11.2.

De plus, lors du passage de la position repliée vers la position déployée le mouvement en translation de la deuxième partie 5 qui est montée mobile provoque un effet de piston et le remplissage par aspiration du réservoir 7a, 7b1, 7b2 à volume variable notamment au niveau de la région 7b1 de la deuxième zone de stockage 7b1, 7b2.

Ce mouvement peut être observé lors de l'entrée de l'applicateur 1 dans le récipient 21 de l'ensemble applicateur 19 contenant le produit cosmétique lorsque la deuxième partie 5 est retenue, en particulier par frottements, lors du passage du goulot 23.

Lors du passage de la position déployée à la position repliée, le réservoir 7a, 7b1, 7b2 à volume variable est tout d'abord à son volume V2.

L'extrémité proximale 3a de la première partie 3 et l'extrémité distale 5b de la deuxième partie 5 qui sont déjà agencées dans le volume interne de l'autre partie 3, 5 pénètrent alors un peu plus dans ce volume interne.

Autrement dit, l'extrémité distale 5b de la deuxième partie 5 se rapproche de l'extrémité distale 3b de la première partie 3.

La zone centrale de stockage 7a qui présentait un volume minimal présente alors un volume maximal et la région 7b1 de la deuxième zone de stockage 7b1, 7b2 qui présentait un volume maximal présente un volume minimal. On observe ainsi un transfert de volume de la région 7b1 de la deuxième zone de stockage 7b1, 7b2 vers la zone centrale de stockage 7a.

Cette modification de volume lors du mouvement en translation d'une position à l'autre provoque l'entrée et/ou la sortie du produit cosmétique par les ouvertures 11.1, 11.2.

De façon avantageuse, ce mouvement en translation se fait lors de l'application du produit cosmétique quand l'utilisateur effectue un mouvement de va et vient horizontal sur la surface à maquiller, notamment par la retenue de l'une des parties par la surface à maquiller.

Il peut aussi être intéressant d'effectuer ces mouvements de translation lors de l'application du produit cosmétique pour permettre de répartir à nouveau le produit cosmétique à l'intérieur du réservoir 7a, 7b1, 7b2 à volume variable de manière à continuer l'application tout en bénéficiant encore de produit et sans avoir à replonger l'applicateur 1 dans le récipient 21.

Dans le mode de réalisation illustré ici, les cils, à l'aide des protubérances 13, vont retenir la partie mobile et permettre son mouvement en translation induisant l'entrée et/ou la sortie du produit cosmétique.

Ce mouvement est aussi favorisé lorsque l'applicateur 1 est inséré dans le récipient 21.

De plus, dans le cas d'un applicateur 1 pourvu de protubérances 13 comme illustré ici, lors du passage de la position déployée à la position repliée le mouvement en translation permet une variation du pas « p » entre les protubérances 13 d'une branche 9.1, 9.2 à une autre branche consécutive 9.1, 9.2.

La définition de « pas » et la notion de variation de pas sont ici semblables à celles expliquées pour le premier mode de réalisation et illustrées aux figures 18a, 18b et 18c.

Cette variation de pas entraîne un cisaillement des cils qui sont pris au milieu des protubérances 13 de manière à les envelopper d'un maximum de produit cosmétique et augmenter ainsi l'effet de volume. Les cils peuvent également être étirés lorsqu'ils se retrouvent coincés entre deux protubérances, ce qui favorise le peignage.

Par ailleurs les ouvertures 11.1, 11.2 peuvent présenter une largeur supérieure à la largeur de la branche 9.1, 9.2 passant dans l'ouverture 11.1, 11.2 comme représentée sur les figures. Cette différence de dimension permet d'une part de faciliter le mouvement en translation de la partie mobile qui peut être retenue par la présence du produit cosmétique, ici de la deuxième partie 5 par rapport à la première partie 3.

D'autre part, cette différence de dimension permet un débattement en rotation de la partie qui est montée mobile par rapport à l'autre partie.

Comme le mouvement en translation, ce mouvement de rotation aide à la restitution du produit cosmétique présent dans le réservoir 7a, 7b1, 7b2 à volume variable. Cela renforce aussi le cisaillement des cils ce qui favorise encore une augmentation de l'effet de volume.

Dans d'autres modes de réalisation non représentés, on peut envisager que chacune des parties 3, 5 comprennent entre deux et six branches 9.1, 9.2 et entre deux et six ouvertures 11.1, 11.2. La largeur des branches 9.1, 9.2 et des ouvertures 11.1, 11.2 est dépendante de leur nombre et tout en tenant compte que la largeur des ouvertures 11.1, 11.2 dépend de la largeur des branches 9.1, 9.2.

On peut ainsi envisager un applicateur 1 dont chacune des parties 3, 5 comprend deux branches 9.1, 9.2 larges qui s'imbriquent dans des ouvertures 11.1, 11.2 larges de l'autre partie 3, 5. De préférence, chacune des branches 9.1, 9.2 comprend alors une pluralité de rangées longitudinales de protubérances 13.

On peut aussi envisager que les branches 9.1, 9.2 et donc les ouvertures 11.1, 11.2 n'aient pas toutes la même largeur. L'applicateur 1 peut ainsi présenter des branches 9.1, 9.2 larges alternées avec des branches 9.1, 9.2 étroites.

Les exemples de réalisation illustrés présentent par exemple dix rangées longitudinales, ce nombre de rangées longitudinales variant en fonction de la distance angulaire choisie entre les rangées longitudinales.

La distance angulaire est comprise dans l'intervalle [10° ; 90°] ; elle est par exemple d'environ 36°.

On peut aussi envisager dans un autre mode de réalisation non illustré, que l'applicateur ne comprenne pas de protubérance. Il s'agit alors de préférence d'un applicateur de gloss pour les lèvres ou de produits de soin pour la peau, par exemple. Le mouvement en translation de la partie mobile provoque une modification du volume du réservoir 7a, 7b1, 7b2 avec notamment un transfert de volume de la première zone de stockage 7a vers la deuxième zone de stockage 7b1, 7b2, et inversement. Cette modification de volume permet alors de réguler la distribution du produit cosmétique à appliquer. En passant de la position déployée à la position repliée, et inversement, l'utilisateur peut provoquer l'entrée et/ou la sortie du produit cosmétique.

Il est à noter aussi que l'applicateur 1 forme avantageusement une brosse.

De préférence, l'applicateur 1 décrit ci-dessus est obtenu par un procédé de fabrication additive.

On entend par procédé de fabrication additive, un procédé de fabrication par ajout de matière, généralement assisté par ordinateur. Un tel procédé de fabrication est aussi appelé impression tridimensionnelle ou encore impression 3D. L'utilisation de l'impression tridimensionnelle permet de réaliser en une seule étape un applicateur 1 en deux parties imbriquées l'une dans l'autre et dont l'une est mobile par rapport à l'autre. Un tel applicateur 1 pourrait s'avérer très complexe voire impossible à obtenir par un procédé classique de moulage par injection. Il est ainsi possible de réaliser, directement et par une unique opération de fabrication, l'applicateur 1 en deux parties. De plus, cette technique permet de s'affranchir de l'utilisation de moules complexes.

Différentes technologies de fabrication additive connues de l'homme du métier peuvent être utilisées. Notamment, il peut s'agir de :
- dépôt de fil en fusion (FDM, pour *Fused deposition modeling* en anglais),
- fusion sélective par laser (SLM pour *Selective Laser Melting* en anglais),
- frittage sélectif par laser (SLS pour *Selective Laser Sintering* en anglais),
- fusion par faisceau d'électrons (EBM pour *Electron Beam Melting* en anglais),
- stéréolithographie ou photopolymérisation (SLA pour *Stereolithography Apparatus* en anglais), ou
- modélisation d'objets laminés (LOM pour *Laminated Object Manufacturing* en anglais).

De préférence, il s'agit des technologies de frittage et/ou de stéréolithographie.

L'invention concerne encore un procédé de fabrication d'un applicateur 1 tel que décrit ci-dessus. Le procédé comprend :
- une étape d'élaboration d'un modèle numérique de l'applicateur 1 ;
- une étape de fabrication de l'applicateur 1 au moyen du modèle numérique.

Le modèle numérique est un fichier informatique qui correspond à un modèle virtuel de l'applicateur 1. Pour l'obtenir, l'applicateur 1 est tout d'abord modélisé de manière à obtenir un modèle CAO qui est ensuite converti dans un format approprié tel qu'un fichier .STL. Le fichier est ensuite exploité sur une machine de fabrication additive. Lors de sa lecture, le modèle numérique est découpé en un certain nombre de couches en fonction de la précision souhaitée. De préférence, les couches correspondent à une section transversale de l'applicateur 1, c'est-à-dire une section de l'applicateur 1 prise dans un plan perpendiculaire à la direction d'extension longitudinale X.

Les matériaux appropriés pour fabriquer chacune des première et deuxième parties 3, 5 et les protubérances 13 par une impression tridimensionnelle sont les polyamides, les résines photosensibles, l'acide polylactique (PLA), l'acrylonitrile butadiène styrène (ABS).

L'invention concerne aussi un ensemble applicateur 19 pour produit cosmétique, comprenant un récipient 21 comprenant un corps formant un réservoir destiné à contenir le produit cosmétique (non représenté), et un applicateur 1, tel que décrit précédemment, adapté pour être fixé sur le récipient 21, de sorte que l'applicateur 1 est logé à l'intérieur du réservoir. L'applicateur 1 est fixé, par exemple, à une extrémité proximale de la tige 17, elle-même fixée à un bouchon 29 avantageusement vissé au récipient 21.

## Revendications

1. Applicateur (1) pour produit cosmétique, comprenant une première partie (3) et une deuxième partie (5) qui s'étendent le long d'une direction d'extension longitudinale (X) d'une extrémité proximale (1a) vers une extrémité distale (1b) libre de l'applicateur,
la première partie (3) et la deuxième partie (5) étant configurées pour former des parties d'application du produit cosmétique,
l'une des parties (3, 5) est montée mobile en translation par rapport à l'autre desdites parties (3, 5) entre au moins une première position repliée et une deuxième position déployée,
les première et deuxième parties (3, 5) sont configurées pour former ensemble un réservoir (7a, 7b1, 7b2) à volume variable qui, destiné à contenir ledit produit cosmétique, présente un premier volume (V1) lorsque lesdites parties (3, 5) occupent la première position repliée et un deuxième volume (V2), lorsque lesdites parties (3, 5) occupent la deuxième position déployée.

2. Applicateur (1) selon la revendication précédente, **caractérisé en ce que** chacune desdites parties (3, 5) est évidée pour présenter un volume interne dans lequel est imbriquée l'autre partie (3, 5).

3. Applicateur (1) selon l'une quelconque des revendications précédentes, **caractérisé en ce que** chacune des parties (3, 5) est une pièce unique monolithique.

4. Applicateur selon l'une quelconque des revendications précédentes, **caractérisé en ce que** ledit applicateur est obtenu sans assemblage.

5. Applicateur (1) selon l'une quelconque des revendications précédentes, **caractérisé en ce que** chacune des parties (3, 5) comprend au moins deux branches (9.1, 9.2) longitudinales délimitant ledit volume interne.

6. Applicateur (1) selon la revendication précédente, **caractérisé en ce que** les branches (9.1) de la première partie (3) sont alternées circonférentiellement avec les branches (9.2) de la deuxième partie (5).

7. Applicateur (1) selon l'une quelconque des revendications 5 ou 6, **caractérisé en ce que** chacune des première et deuxième parties (3, 5) comprend au moins une ouverture (11.1, 11.2) agencée entre deux branches (9.1, 9.2) consécutives, l'ouverture (11.1, 11.2) permettant le passage d'une branche (9.1, 9.2) de l'autre partie (3, 5).

8. Applicateur (1) selon la revendication précédente, **caractérisé en ce que** l'ouverture (11.1, 11.2) présente une largeur supérieure à la largeur de la branche (9.1, 9.2) passant dans l'ouverture (11.1, 11.2) de manière à permettre un débattement en rotation de la partie (3, 5) qui est mobile par rapport à l'autre partie (3, 5).

9. Applicateur (1) selon l'une quelconque des revendications 5 à 8, **caractérisé en ce que** tout ou au moins une partie desdites branches (9.1, 9.2) comporte au moins une rangée de protubérances (13) s'étendant radialement en saillie le long de l'extension longitudinale (X).

10. Applicateur (1) selon la revendication précédente prises en combinaison avec la revendication 2, **caractérisé en ce que** la première partie (3) présente une extrémité distale (3b) libre pourvue de protubérances (13) et une extrémité proximale (3a) agencée dans le volume interne de la deuxième partie (5) et la deuxième partie (5) présente une extrémité distale (5b) libre dépourvue de protubérances (13) et agencée dans le volume interne de la première partie (3).

11. Applicateur (1) selon l'une quelconque des revendications précédentes, **caractérisé en ce que** l'extrémité proximale (5a) de la deuxième partie (5) est configurée pour être fixée à une tige (17) de l'applicateur (1) et l'extrémité proximale (3a) de la première partie (3) est libre et la première partie (3) est mobile en translation par rapport à la deuxième partie (5).

12. Applicateur (1) selon l'une quelconque des revendications 1 à 10, **caractérisé en ce que** l'extrémité proximale (3a) de la première partie (3) est configurée pour être fixée à une tige (17) de l'applicateur (1), l'extrémité proximale (5a) de la deuxième partie (5) est libre et comprend un orifice (27) traversé par l'extrémité proximale (3a) de la première partie (3) et la deuxième partie (5) est mobile en translation par rapport à la première partie (3).

13. Applicateur (1) selon l'une quelconque des revendications précédentes, **caractérisé en ce que** l'applicateur (1) est obtenu par fabrication additive et lesdites protubérances (13) sont venues de matière desdites branches (9.1, 9.2).

14. Ensemble applicateur (19) pour produit cosmétique, comprenant :
- un récipient (21) comprenant un corps formant un réservoir destiné à contenir le produit cosmétique, et
- un applicateur (1) du produit cosmétique selon l'une des revendications 1 à 13 adapté pour être fixé sur le récipient (21), de sorte que l'applicateur (1) est logé à l'intérieur du réservoir.

15. Procédé de fabrication d'un applicateur (1) pour produit cosmétique selon l'une quelconque des revendications 1 à 13, le procédé comprenant :
- une étape d'élaboration d'un modèle numérique de l'applicateur (1) ;
- une étape de fabrication de l'applicateur (1) au moyen du modèle numérique.
